# EUROPÄISCHE PATENTSCHRIFT

(11) **EP 1 858 153 B1**
(45) Veröffentlichungstag und Bekanntmachung des Hinweises auf die Patenterteilung: **22.02.2012**
(21) Anmeldenummer: 07009699.5
(22) Anmeldetag: 15.05.2007
(51) Int. Cl.: H02P 6/10, H02P 9/10, H02P 21/05, H02P 23/04, G05B 19/18

(54) **Elektrischer Antrieb sowie Verfahren zum Steuern eines solchen Antriebs**
Electric motor and method for actuating such a motor
Engrenage électrique tout comme procédé de commande d'un tel engrenage

(30) Priorität: 18.05.2006 DE 102006023442; 31.05.2006 DE 102006025366
(43) Veröffentlichungstag der Anmeldung: 21.11.2007
(73) Patentinhaber: Prüftechnik Dieter Busch AG, 85737 Ismaning (DE)
(72) Erfinder: Becker, Edwin, Dr., 48734 Reken (DE)

(56) Entgegenhaltungen:
- EP-A1- 0 469 617
- DE-C1- 10 246 093
- US-B1- 6 196 345

## Beschreibung

Die Erfindung betrifft ein Verfahren zum Steuern eines elektrischen Antriebs sowie einen elektrischen Antrieb.

Jeder Antriebsstrang stellt grundsätzlich ein schwingungsfähiges System dar. Er kann durch äußere Einwirkungen oder durch periodische Änderung innerer Parameter zu Schwingungen angeregt werden. Ein solcher Zustand führt jedoch gegenüber dem schwingungsarmen Stationärbetrieb zu Belastungserhöhungen und wird nur selten bei der Projektierung der Anlagen vorab berücksichtigt. Zwischenzeitlich zeigt sich die Tendenz, dass rotierende Maschinen immer leichter und schneller und dass elektrische Antriebssysteme, Umrichter, Steuer- und Regelsysteme immer drehzahldynamischer und leistungsfähiger werden. Damit steigt die Gefahr, dass Drehschwingungen (Torsionsschwingungen) in mechanischen und/oder in elektrischen Anlagenkomponenten angeregt und vom elektrischen Antrieb verstärkt werden und es zu vorzeitigen Verschleiss in Maschinenkomponenten und zum plötzlichen Anlagenausfall kommt.

Da Drehschwingungsanregungen sich in den nächsten Jahren stark verbreiten werden, sind einfache messtechnische Maßnahmen zum rechtzeitigen und automatischen Erkennen von Drehschwingungen erforderlich. Aktive und autarke Schutz- und Wächter-Systeme für elektrische und/oder mechanische Antriebssysteme werden erforderlich.

Die Drehschwingung ist eine spezielle Form der mechanischen Schwingung. Bei diesem Sonderfall pendelt eine Masse in Form eines Massenträgheitsmomentes um eine Drehfeder, wobei diese Feder in der Praxis ein drehmomentübertragendes Bauteil wie eine Welle sein kann. Drehschwingungen sind bei der Erzeugung einer gleichmäßigen Drehbewegung unerwünscht, deshalb werden z.B. bei verbrennungsmotorischen Antriebssträngen häufig Dämpferelemente wie Viskosedämpfer und/oder spezielle Kupplungen in den Antriebsstrang eingebunden, die die schwingungsanregende Wirkung von Verbrennungsmotoren von anzutreibenden Maschinen fernhalten. Eine weitere Möglichkeit ist auch im allgemeinen Maschinenbau der Einsatz eines Schwungrades, das die Drehschwingung als träge Masse dämpft. Eine dritte Möglichkeit ist die aktive Bedämpfung durch Regelalgorithmen usw..

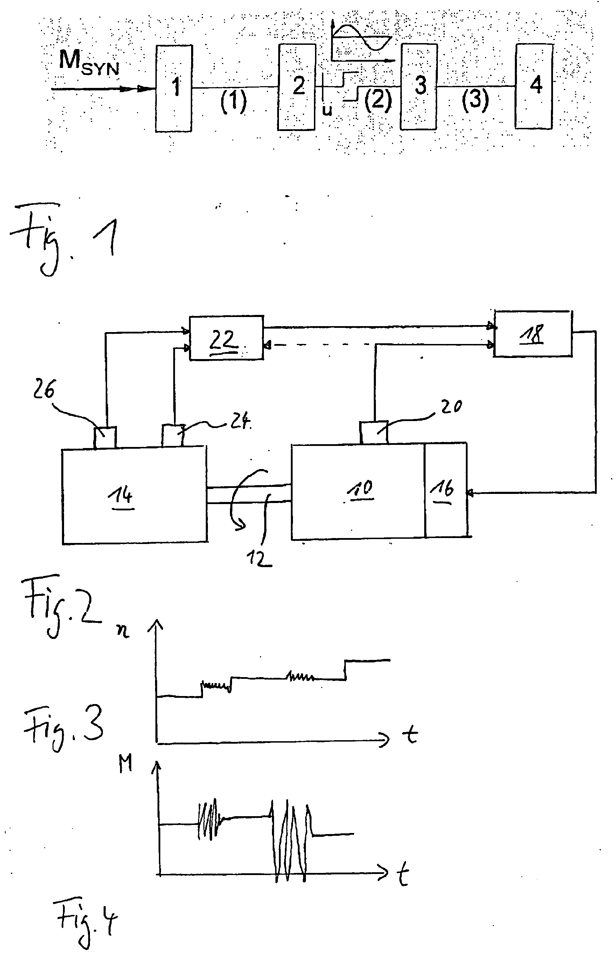

Für Verbrennungsmotoren ist es üblich, schon während der Konstruktionsphase Drehschwingungsberechnungen und Computersimulationen auszuführen. Ziel ist es dabei, Kenntnis über die örtlich an den Komponenten auftretenden Belastungs- und Beanspruchungsverläufen zu ermitteln und Auswirkungen von Drehschwingungen bereits im Projektstadium zu beurteilen. Zudem lassen sich mit Simulationen Schwingbeanspruchungen an Stellen untersuchen, die an der realen Maschine oder Anlage messtechnisch nicht oder nur mit hohem Aufwand zugänglich sind. Fig. 1 zeigt ein Antriebssystem bestehend aus 4 Massen, drei Steifigkeiten und einer spielbehafteten Verzahnung. Als Erreger wirkt das Moment eines Synchronmotors. Aus Eigenschwingungsberechnungen würden sich für diesen 4-Massen-Schwinger drei Dreheigenfrequenzen ergeben, die bei Resonanz mit antriebsspezifischen Erreger-Frequenzen zu Mehrbeanspruchungen in den Antriebskomponenten führen können.

Es zeigte sich, dass zunehmend auch elektrisch und insbesondere Umrichter getriebene Maschinen zu Drehschwingungsanregungen führen können und deshalb Drehschwingungen vorherberechnet werden müssen. Ziel ist es, die Eigenfrequenzen des Systems und die zu erwartenden Resonanzüberhöhungen zu ermitteln. Zur Durchführung dieser Rechnungen gibt es Rechenprogramme, die es erlauben, Massenträgheitsmomente, Steifigkeiten und Dämpfungen zu berechnen und Eigenfrequenzen der mechanischen Antriebskomponenten zu ermitteln. Die magnetischen und elektrischen Kräfte in elektrischen Motoren und Generatoren können durch diese Rechenprogramme nicht berücksichtigt werden. Sie werden deshalb oft drastisch vereinfacht angenommen oder sogar vollständig vernachlässigt.

Lediglich an universitären Einrichtungen versucht man, z.B. durch eine besondere Aufbereitung der Gleichungen der Drehstromasynchronmaschine die magnetischen Kräfte durch ein mechanisches Ersatzsystem mit frequenzunabhängigen Parametern nachzubilden, so daß diese Kräfte in üblichen Rechenprogrammen berücksichtigt werden können. Komplexe Reglerstrukturen in Umrichtern zu beherrschen, sind noch schwieriger und sind aktueller Forschungsgegenstand. Meist bedient man sich wieder umfangreicher und komplizierter Messungen und Tests, um die Berechnungen zu validieren.

In der Schiffsbranche sind bei Verbrennungsmaschinen Drehschwingungen abnahmepflichtig. Es ist bekannt, dass bei abnahmepflichtigen Schiffen für die Hauptantriebe Drehschwingungsberechnungen vorzulegen und Drehschwingungsmessungen während der Abnahmefahrten auszuführen sind. Genutzt werden bei den Messungen oft Dehnungsmesstreifen, deren Ergebnisse dann vom Inspektor der Klassifikationsgesellschaft bewertet werden, um ausreichende Maschinenlebensdauer zu erreichen. Für Getriebe gelten im Schiffbau beispielsweise folgende Regeln:
a) Im Betriebesdrehzahlbereich (plus 5% und kleiner 10%) sollen im allgemeinen in keiner belasteten Getriebestufe höhere Wechseldrehmomente als 30% des mittleren Drehmomentes dieser Stufe auftreten.
b) Beim An- und Abfahren dürfen die beim Durchfahren der Resonanzen auftretenden Wechseldrehmomente im Getriebe nicht größer als etwa das zweifache des mittleren übertragenden Nenndrehmomentes sein, für das das Getriebe ausgelegt ist.
c) Lastwechsel infolge von Wechseldrehmomenten ist im allgemeinen nur beim Durchfahren im unteren Drehzahlbereich (bis 35 %) zulässig. Bei höheren Drehzahlen sind Sperrbereiche einzuführen.

Bei Industrieantrieben lassen sich die o.g. Regeln ebenfalls verwenden, zumal keine allgemeingültigen besseren Werte zur Verfügung stehen. So zeigt sich erst im neuen Jahrtausend bei drehzahlvariabel betriebenen Maschinen und Anlagen die Tendenz, dass Drehschwingungen angeregt werden und sich unkontrolliert ausprägen. Die Folge können extrem hohe Körperschallschwingungen, vorzeitiger Verschleiß und/oder Dauer- bzw. Schwingbrüche oder unerwartete und vorzeitige Lagerschäden sein.

Kommt es dann zu wiederholten Schäden, wird vom betroffenen Komponentenhersteller oft durch aufwändige Belastungsmessungen mit Dehnungsmesstreifen-Messungen versucht, die Wechseldrehmomente bei der Drehschwingung W zu erfassen und Maßnahmen zum Verhindern der Drehschwingungsanregung zu finden.

An industriellen Getrieben und Antriebssystemen können Drehschwingungen begrenzt werden, indem durch Zusatzmassen oder, falls technisch machbar, veränderte Steifigkeiten das Drehschwingungssystem verstimmt und gedämpft werden. Es gibt aber auch Beispiele, wo Drehzahlbereiche für die Maschine gezielt gesperrt werden oder gezielt Filter im Umrichter gesetzt werden, um Zusatzbeanspruchungen infolge von Drehschwingungen zu begrenzen.

Dieses individuelle Vorgehen eignet sich jedoch nur für einzelne Großantriebe und nicht für den allgemeinen Maschinen- und Anlagenbau, denn Drehschwingungen entstehen immer aus dem Zusammenwirken von Massenträgheitsmomenten und Steifigkeiten, die bei jedem Einsatzfall anders und anwendungsspezifisch sind. So haben beispielsweise Papiermaschinen zwar vergleichbare elektrische Antriebstechnik, jedoch ergeben sich durch unterschiedliche Drehzahlen, Walzen, Antriebe, Getriebe, Kupplungen und Walzendurchmesser immer andere Schwingungssysteme.

Bei Drehschwingungen entspricht die Schwingbewegung einer Verdrehung um die Rotationsachse. Diese zusätzliche Verdrehung bewirkt erhöhte Materialbeanspruchungen und äußert sich nur in Sonderfällen im Körperschall- oder Luftschallsignal. Erst wenn Antriebskomponenten soviel Energie hochdynamisch aufbringen können, dass sie die Drehschwingung verstärken, lassen sich Körperschallanregungen deutlich messen. Erwähnt sei eine Windenergieanlage, wo der Umrichter versucht, Drehungleichförmigkeiten aus einer Planetenstufe auszuregeln und ein Papiermaschinenantrieb mit Gelenkwelle, wo der Umrichter versucht, die Ungleichförmigkeit im Kardan auszuregeln.

Drehschwingungen können angeregt werden durch oszillierende Drehmomente infolge kinematischer und dynamischer Erregungen (Verbrennungsmotoren, Kolbenpumpen, Zahnrädern, Prozesseinflüsee), Beschleunigungen infolge von Anfahr- und Bremsvorgängen, Schaltvorgängen, Ungleichförmigkeit bei Kreuzgelenkwellen, scheinbar oszillierenden Drehmoment infolge von übersprechenden Biegeverformungen aus statischen Versatz oder aus oszillierenden Biegeverformungen usw.

Drehschwingungen treten jeweils bei festen Frequenzen auf und lassen sich mit Dehnungsmesstreifen, appliziert auf Wellen nachweisen. Dies gelingt aber nur durch sehr hochauflösende und zeitlich langen Drehmomentmessungen, und immer in Bezug auf die betroffene Welle (es muß sich auch potentielle Energie aufbauen).

Ein hochdynamisches Antriebsregelsystem und hochpolige Antriebsmotoren, wie die zukünftigen High-Torque-Motoren, sind dagegen in der Lage, bei sich aufbauenden Drehschwingungen die erforderliche Energie unabhängig vom Messort aufzubringen und verstärkt die Drehschwingungen im Antriebsstrang zu verstärken.

Aus der US 2005/0224047 A1 ist eine Drehzahlregelung eines Generators mit Verblendungsantrieb bekannt, wobei das für die Regelschleife verwendete Drehzahlmeßsignal hinsichtlich Drehzahloszillatoren analysiert wird und wobei das Filter der Regelschleife in Abhängigkeit von der Frequenz der erfaßten Drehzahloszillationen verändert wird, um die Drehzahlschwankungen möglichst gering zu halten. Die Drehzahl soll dabei auf einen möglichst konstanten Wert geregelt werden.

Die US 5,994,959 betrifft eine Drehzahlregelung für einen Fahrzeugmotor, wobei ein Kompensator vorgesehen ist, der als Bandpaß ausgebildet ist, welcher die Drehresonanzfrequenzen des Antriebs durchläßt, wobei der Kompensator bewirkt, dass ein drehschwingungskompensierender Strom erzeugt wird, wenn die Drehzahl des Antriebs eine Frequenzkomponente im Bereich der Drehschwingungsresonanzfrequenzen des Antriebs aufweist.

Die US 6,144,181 betrifft eine Vorrichtung zur Minimierung von resonanten Drehschwingungen in einem angetriebenen System, wobei ein spezielles Notch-Filter verwendet wird, welches in die Regelschleife eingebunden wird.

Die US 2005/0093492 A1 betrifft eine Drehzahlregelung für einen Antrieb, wobei erwähnt wird, dass üblicherweise die im Meßsignal der Abtriebswellendrehzahl enthaltenen Drehzahlschwankungen mittels geeigneter Filter ausgefiltert werden müssen, bevor dieses gealterte Drehzahl-Ist-Signal vom Regler verwendet werden kann. Gemäß der US 2005/0093492 A1 soll dieses Ziel dadurch erreicht werden, dass die Drehzahl nicht nur am Antrieb, sondern auch an der Last erfaßt wird und der Regler mit einer Linearkombination dieser beiden Meßsignale als Ist-Signal gespeist wird.

In der DE 10 2004 039 140 A1 ist eine Drehschwingungsüberwachung beschrieben, welche zusätzlich zu der Drehzahlregelung vorgesehen ist, um einen Drehschwingungsdämpfer zu überwachen. Dabei werden Drehschwingungen der rotierenden Teile anhand von Drehzahlschwankungen erfaßt, wobei zur Drehzahlerfassung Inkrementalgeber vorgesehen sind. Das Ergebnis der Drehschwingungsüberwachung besteht darin, ein Signal auszugeben, welches eine Wartung oder Instandsetzung des Drehschwingungsdämpfers veranlaßt.

Im Dokument DE 102 46 093 C1 wird eine Regelung eines elektrischen Antriebs dargestellt, bei der die Achslage bzw. die Drehzahl einer Achse mit einem Sensor erfasst wird und bei der mit Filtern und/oder Differential-Verzögerungsgliedern die Drehzahlkonstanz verbessert wird. Eine Erkennung und/oder Bewertung von Drehschwingungs-Lastzuständen durch Auswertung der zeitlichen Änderung der Drehzahl wird nicht vorgenommen.

Es ist Aufgabe der vorliegenden Erfindung, ein Verfahren zum Steuern eines elektrischen Antriebs sowie einen solchen Antrieb zu schaffen, wobei auf effiziente Weise für einen Schutz des von dem Antrieb angetriebenen Systems vor unzulässigen Drehschwingungen gesorgt werden soll.

Dieses Aufgabe wird erfindungsgemäß gelöst durch ein Verfahren gemäß Anspruch 1 sowie einen Antrieb gemäß Anspruch 11.

Bei der erfindungsgemäßen Lösung ist vorteilhaft, dass dadurch, dass zusätzlich zu der Regelungseinrichtung des Motors eine Überwachungseinrichtung zum Erkennen von unzulässigen Drehschwingungszuständen der Last vorgesehen ist, welche an der Last erfaßte Drehzahlsignale eines Sensors auswertet, um bei Erkennen eines unzulässigen Drehschwingungslastzustands ein entsprechendes Signal an die Regelungseinrichtung auszugeben, um die Regelparameter und/oder die Filter der Regelungseinrichtung in vorgegebener Weise so zu ändern, dass die Last wieder in einen zulässigen Drehschwingungszustand gebracht wird, auf effiziente Weise für einen Schutz der von dem Antrieb angetriebenen Last vor unzulässigen Drehschwingungszuständen gesorgt werden kann.

Bevorzugte Ausgestaltungen der Erfindung sind in den Unteransprüchen angegeben.

Im folgenden wird ein Beispiel der Erfindung anhand der beigefügten Zeichnungen näher erläutert. Dabei zeigen:
- Fig. 1: ein Antriebssystem bestehend aus vier Massen, drei Steifigkeiten und einer spielbehafteten Verzahnung;
- Fig. 2: eine schematische Darstellung eines Antriebs mit Last gemäß der vorliegenden Erfindung; und
- Fig. 3: einen beispielhaften zeitlichen Verlauf der an der Last des Systems von Fig. 2 gemessenen Drehzahl; und
- Fig. 4: den zu Fig. 3 zugehörigen zeitlichen Verlauf des Drehmoments.

In Fig. 2 ist schematisch ein Antrieb gezeigt, der einen Motor 10 aufweist, welcher über eine Ankopplung 12 eine Last 14 zu einer Drehbewegung antreibt. Der Motor 10 wird von einem Umrichter 16 gesteuert, auf den ein Regler 18 einwirkt, der seinen Ist-Wert von einer Sensoreinrichtung 20 erhält, welche die Drehzahl und/oder das Drehmoment am Motor 10 erfaßt. Der Regler 18 kann dazu dienen, die Drehzahl und/oder das Drehmoment des Motors 10 zu regeln.

Bei der Last 14 kann es sich beispielsweise um die Trockengruppe einer Papiermaschine handeln. Trockengruppen von Papiermaschinen werden in Abhängigkeit von der Papierqualität bei unterschiedlichen Drehzahlen gefahren, wobei ein geregelter Motor ein Getriebe und Papierwalzen antreibt. Zeitgemäß werden erhöhte Durchsätze in der Papierindustrie oft durch Drehzahlsteigerungen erreicht, wozu Gleichstromantriebe durch meist umrichtergesteuerte hochdynamische Drehstromantriebe ersetzt werden. Bei besonders hochdynamischen Antrieben verzichtet man dabei sogar auf die Drehzahlregelung, und es findet eine hochdynamische Drehmomentregelung statt. Diese ist aber so empfindlich, dass Drehschwingungen nicht nur angeregt, sondern der elektrische Antrieb sogar versucht, die Drehmoment- und Drehzahlschwankungen auszumitteln. Die Folge sind erhöhte Schwingungen und Beanspruchungen, die im kritischen Fall nicht nur schwellend, sondern auch mit Wechselbelastungen verbunden sind (diese zeigen sich in Fig. 4 in Form von Nulldurchgängen beim Drehmoment). Bei einer solchen Papiermaschine wurde durch untypisches Schadensbild z.B. an Kupplungsverzahnungen und erhöhten Schwingungen in begrenzten Drehzahlbereichen festgestellt, dass komplexe dynamische Belastungen im Antriebsstrang wirken, die zu Schwingbrüchen innerhalb des Getriebes führten. Durch Einbau einer zusätzlichen externen Reglerstrecke wurde anschließend versucht, die Schwingungen zu reduzieren. Damit verbunden waren aber andere Einbußen in der Dynamik auf regelrelevante Zustände.

Bei der erfindungsgemäßen Lösung ist dagegen eine zusätzlich zum Regler 18 wirkende Überwachungseinrichtung 22 zum Erkennen von unzulässigen Drehschwingungszuständen der Last 14 vorgesehen, welche mittels einem oder mehreren Sensoren 24, 26 die Drehzahl an einer oder mehreren Stellen der Last 14 erfaßt, die zeitliche Änderung der erfaßten Drehzahl auswertet, eine Bewertung des Drehschwingungslastzustands basierend auf der Auswertung der zeitlichen Änderung der erfaßten Drehzahl vornimmt und schließlich bei Erkennen eines unzulässigen Drchschwingungslastzustands ein entsprechendes Signal an den Regler 18 ausgibt, um die Regelparameter und/oder die Filter des Regler 18 in vorgegebener Weise so zu ändern, dass die Last 14 wieder in einen zulässigen Drehschwingungszustand gebracht wird. Als zusätzliche Eingangsgröße kann die Überwachungseinrichtung 22 das von der Sensoreinrichtung 20 des Reglers 18 erfaßte Signal erhalten.

Vorzugsweise werden die Drehzahlschwankungen hochdynamisch erfaßt, beispielsweise mit einer zeitlichen Auflösung von mindestens 0,1 sec. Zweckmäßigerweise werden die Amplituden der Drehzahländerung frequenzabhängig und/oder ordnungsabhängig von der Überwachungseinrichtung 22 ausgewertet. Dabei wird ein unzulässiger Drehschwingungslastzustand erkannt, falls die Amplitude der Drehzahländerung in mindestens einem Frequenzbereich einen frequenzabhängig vorgegebenen Schwellwert übersteigt, wobei vorzugsweise das von der Überwachungseinrichtung 22 ausgegebene Signal davon abhängt, in welchem Frequenzbereich bzw. in welchen Frequenzbereichen der jeweilige Schwellwert wie stark überschritten wurde. Die Überwachungseinrichtung 22 kann auch so ausgebildet sein, dass mittels entsprechender Sensoren auch Körperschallschwingungen an der Last 14 erfaßt werden und von der Überwachungseinrichtung 22 ausgewertet werden, um bei der Ausgabe des Signals berücksichtigt zu werden.

Bei Ausgabe des entsprechenden Signals von der Überwachungseinrichtung 22 werden die Regelparameter und Filter des Reglers 18 so geändert, dass keine Zusatzenergie in die erfaßten Drehschwingungen eingespeist wird, um Verstärkungen der angefachten Drehschwingungen zu vermeiden.

Mittels des in Fig. 2 gezeigten Systems können unzulässige Drehschwingungen in dem Antriebssystem anhand der zusätzlichen Anregungen in den dynamischen Drehzahlsignalen von der Überwachungseinrichtung 22 sofort erkannt werden und durch Ausgabe eines die Regelcharakteristik des Reglers 18 entsprechend verändernden Signals reduziert werden.

## Patentansprüche

1. Verfahren zum Steuern eines elektrischen Antriebs, der einen Motor (10), eine Regelungseinrichtung (16, 18, 20) zum Regeln der Drehzahl und/oder des Drehmoments des Motors, mindestens einen Sensor (24, 26) zum Erfassen der Drehzahl an einer von dem Motor angetriebenen, rotierenden Last (14), sowie eine von dem Sensor gespeiste Überwachungseinrichtung (22) zum Erkennen von unzulässigen Drehschwingungs-Zuständen der Last aufweist, wobei der zeitliche Verlauf der Drehzahl von dem Sensor an dem Lastelement erfasst wird,
**dadurch gekennzeichnet, dass**
die zeitliche Änderung der erfassten Drehzahl von der Überwachungseinrichtung ausgewertet wird, von der Überwachungseinrichtung eine Bewertung des Drehschwingungs-Lastzustands basierend auf der Auswertung der zeitlichen Änderung der erfassten Drehzahl vorgenommen wird, und bei Erkennen eines unzulässigen Drehschwingungs-Lastzustands ein entsprechendes Signal an die Regelungseinrichtung ausgegeben wird, um die Regelparameter und/oder die Filter der Regelungseinrichtung in vorgegebener Weise so zu ändern, dass die Last wieder in einen zulässigen Drehschwingungs-Zustand gebracht wird.

2. Verfahren gemäß Anspruch 1, **dadurch gekennzeichnet, dass** die Drehzahl mit einer zeitlichen Auflösung von mindestens 0,1 sec erfasst wird.

3. Verfahren gemäß Anspruch 1 oder 2, **dadurch gekennzeichnet, dass** die Amplituden der Drehzahländerung frequenzabhängig und/oder ordnungsabhängig ausgewertet werden.

4. Verfahren gemäß Anspruch 3, **dadurch gekennzeichnet, dass** ein unzulässiger Drehschwingungs-Lastzustands erkannt wird, falls die Amplitude der Drehzahländerung in mindestens einem Frequenzbereich einen frequenzabhängig oder ordnungsabhängig vorgegebenen Schwellwert übersteigt.

5. Verfahren gemäß Anspruch 4, **dadurch gekennzeichnet, dass** das Signal der Überwachungseinrichtung (22) davon abhängt, in welchem Frequenzbereich oder Ordnungsbereich bzw. in welchen Frequenzbereichen der jeweilige Schwellwert überschritten wurde.

6. Verfahren gemäß Anspruch 5, **dadurch gekennzeichnet, dass** das Signal der Überwachungseinrichtung davon abhängt, wie stark der jeweilige Schwellwert überschritten wurde.

7. Verfahren gemäß einem der vorhergehenden Ansprüche, **dadurch gekennzeichnet, dass** mehrere Sensoren (24, 26) zum Erfassen der Drehzahl an unterschiedlichen Stellen an der Last (14) vorgesehen sind.

8. Verfahren gemäß einem der vorhergehenden Ansprüche, **dadurch gekennzeichnet, dass** der Motor (10) von einem Umrichter (16) oder ähnlichen hochdynamischen Ansteuereinheit angesteuert wird.

9. Verfahren gemäß einem der vorhergehenden Ansprüche, **dadurch gekennzeichnet, dass** von der Überwachungseinrichtung (22) auch an der Last (14) erfasste Körperschallschwingungen ausgewertet werden.

10. Verfahren gemäß einem der vorhergehenden Ansprüche, **dadurch gekennzeichnet, dass** die Regelparameter und Filter so geändert werden, dass keine Zusatzenergie in die erfassten Drehschwingungen eingespeist wird.

11. Elektrischer Antrieb, mit einem Motor (10), einer Regelungseinrichtung (16, 18, 20) zum Regeln der Drehzahl und/oder des Drehmoments des Motors, mindestens einem Sensor (24, 26) zum Erfassen des zeitlichen Verlaufs der Drehzahl an einer von dem Motor angetrieben rotierenden Last (14), sowie einer von dem Sensor gespeisten Überwachungseinrichtung (22) zum Erkennen von unzulässigen Drehschwingungs-Zuständen der Last,
**dadurch gekennzeichnet, dass**
die Überwachungseinrichtung ausgebildet ist, um die zeitliche Änderung der erfassten Drehzahl auszuwerten,
eine Bewertung des Drehschwingungs-Lastzustands basierend auf der Auswertung der zeitlichen Änderung der erfassten Drehzahl vorzunehmen und bei Erkennen eines unzulässigen Drehschwingungs-Lastzustands ein entsprechendes Signal an die Regelungseinrichtung auszugeben, um die Regelparameter und/oder die Filter der Regelungseinrichtung in vorgegebener Weise so zu ändern, dass die Last wieder in einen zulässigen Drehschwingungs-Zustand gebracht wird.

## Claims

1. Method for controlling an electric drive which has a motor (10), a regulating device (16, 18, 20) for regulating the rotation speed and/or the torque of the motor, at least one sensor (24, 26) for detecting the rotation speed on a rotating load (14) which is driven by the motor, and a monitoring device (22), which is fed by the sensor, for identifying impermissible rotational oscillation states of the load, with the time profile of the rotation speed being detected by the sensor on the load element, **characterized in that** the change in the detected rotation speed over time is evaluated by the monitoring device, an assessment of the rotational oscillation load state is performed by the monitoring device based on the evaluation of the change in the detected rotation speed over time, and, when an impermissible rotational oscillation load state is identified, a corresponding signal is output to the regulating device in order to change the regulating parameters and/or the filters of the regulating device in a predefined manner such that the load is returned to a permissible rotational oscillation state.

2. Method according to Claim 1, **characterized in that** the rotation speed is detected with a time resolution of at least 0.1 sec.

3. Method according to Claim 1 or 2, **characterized in that** the amplitudes of the change in rotation speed are evaluated in a frequency-dependent and/or order-dependent manner.

4. Method according to Claim 3, **characterized in that** an impermissible rotational oscillation load state is identified if the amplitude of the change in rotation speed exceeds a threshold value which is predefined in a frequency-dependent or order-dependent manner in at least one frequency range.

5. Method according to Claim 4, **characterized in that** the signal from the monitoring device (22) depends on the frequency range or order range or the frequency ranges in which the respective threshold value has been exceeded.

6. Method according to Claim 5, **characterized in that** the signal from the monitoring device depends on the amount by which the respective threshold value has been exceeded.

7. Method according to one of the preceding claims, **characterized in that** a plurality of sensors (24, 26) for detecting the rotation speed are provided at different points on the load (14).

8. Method according to one of the preceding claims, **characterized in that** the motor (10) is actuated by a converter (16) or similar highly dynamic actuation unit.

9. Method according to one of the preceding claims, **characterized in that** structure-borne oscillations which are detected on the load (14) are also evaluated by the monitoring device (22).

10. Method according to one of the preceding claims, **characterized in that** the regulating parameters and filters are changed such that no additional energy is fed into the detected rotational oscillations.

11. Electric drive having a motor (10), a regulating device (16, 18, 20) for regulating the rotation speed and/or the torque of the motor, at least one sensor (24, 26) for detecting the time profile of the rotation speed on a rotating load (14) which is driven by the motor, and a monitoring device (22), which is fed by the sensor, for identifying impermissible rotational oscillation states of the load, **characterized in that** the monitoring device is designed to evaluate the change in the detected rotation speed over time, to perform an assessment of the rotational oscillation load state based on the evaluation of the change in the detected rotation speed over time, and, when an impermissible rotational oscillation load state is identified, to output a corresponding signal to the regulating device in order to change the regulating parameters and/or the filters of the regulating device in a predefined manner such that the load is returned to a permissible rotational oscillation state.

## Revendications

1. Procédé de commande d'un entraînement électrique qui présente un moteur (10), un dispositif de régulation (16, 18, 20) qui régule la vitesse de rotation et/ou le couple de rotation du moteur, au moins un détecteur (24, 26) qui détecte la Vitesse de rotation sur une charge tournante (14) entraînée par le moteur ainsi qu'un dispositif de surveillance (22) alimenté par le détecteur et détectant des états inadmissibles d'oscillations en rotation de la charge, l'évolution de la vitesse de rotation en fonction du temps étant saisie sur l'élément de charge par le détecteur,
**caractérisé en ce que**
la modification temporelle de la vitesse de rotation saisie est évaluée par le dispositif de surveillance, une évaluation d'un état d'oscillations de rotation de la charge étant réalisée par le dispositif de surveillance à partir de l'évaluation de la modification dans le temps de la vitesse de rotation saisie et, lors de la détection d'un état inadmissible d'oscillations en rotation de la charge, un signal approprié est délivré au dispositif de régulation pour modifier de manière prédéterminée les paramètres de régulation et/ou les filtres du dispositif de régulation de telle sorte que la charge soit ramenée dans un état admissible d'oscillations en rotation.

2. Procédé selon la revendication 1, **caractérisé en ce que** la vitesse de rotation est saisie à une résolution temporelle d'au moins 0,1 s.

3. Procédé selon les revendications 1 ou 2, **caractérisé en ce que** les amplitudes de la modification de vitesse de rotation sont évaluées en fonction de la fréquence et/ou de l'ordre.

4. Procédé selon la revendication 3, **caractérisé en ce qu'**un état inadmissible d'oscillations en rotation de la charge est détecté au cas où l'amplitude de la modification de la vitesse de rotation dépasse une valeur de seuil prédéterminée, qui dépend de la fréquence ou de l'ordre, dans au moins une plage de fréquence.

5. Procédé selon la revendication 4, **caractérisé en ce que** le signal du dispositif de surveillance (22) dépend de la plage de fréquence ou de la plage d'ordre ou encore des plages de fréquences dans lesquelles la valeur de seuil respective a été dépassée.

6. Procédé selon la revendication 5, **caractérisé en ce que** le signal du dispositif de surveillance dépend de l'intensité à laquelle la valeur de seuil respective a été dépassée.

7. Procédé selon l'une des revendications précédentes, **caractérisé en ce que** plusieurs détecteurs (24, 26) de saisie de la vitesse de rotation sont prévus en différents emplacements de la charge (14).

8. Procédé selon l'une des revendications précédentes, **caractérisé en ce que** le moteur (10) est commandé par un convertisseur (16) ou une unité similaire de commande à haute dynamique.

9. Procédé selon l'une des revendications précédentes, **caractérisé en ce que** les vibrations acoustiques du corps saisies par le dispositif de surveillance (22) sont également évaluées sur la charge (14) .

10. Procédé selon l'une des revendications précédentes, **caractérisé en ce que** les paramètres de régulation et les filtres sont modifiés de telle sorte qu'aucune énergie supplémentaire ne soit injectée dans les oscillations de rotation détectées.

11. Entraînement électrique qui présente un moteur (10), un dispositif de régulation (16, 18, 20) qui régule la vitesse de rotation et/ou le couple de rotation du moteur, au moins un détecteur (24, 26) qui détecte la vitesse de rotation sur une charge tournante (14) entraînée par le moteur ainsi qu'un dispositif de surveillance (22) alimenté par le détecteur et détectant des états inadmissibles d'oscillations en rotation de la charge, l'évolution de la vitesse de rotation en fonction du temps étant saisie sur l'élément de charge par le détecteur,
**caractérisé en ce que**
le dispositif de surveillance est configuré pour évaluer la modification temporelle de la vitesse de rotation saisie,
pour effectuer une évaluation d'un état d'oscillations en rotation de la charge à sur base de l'évaluation de la modification temporelle de la vitesse de rotation saisie et pour, en cas de détection d'un état inadmissible d'oscillations en rotation de la charge, délivrer à l'unité de régulation un signal approprié pour modifier de manière prédéterminée les paramètres de régulation et/ou les filtres du dispositif de régulation de telle sorte que la charge soit ramenée dans un état admissible d'oscillations en rotation.
